Europäisches Patentamt

European Patent Office

Office européen des brevets

(19)

(11) Veröffentlichungsnummer: **0 110 072**
A2

# (12) EUROPÄISCHE PATENTANMELDUNG

(21) Anmeldenummer: 83110136.5

(22) Anmeldetag: 11.10.83

(51) Int. Cl.³: **G 02 B 7/26**

(30) Priorität: 08.11.82 DE 3241155

(43) Veröffentlichungstag der Anmeldung: **13.06.84**
**Patentblatt 84/24**

(84) Benannte Vertragsstaaten: **AT BE CH DE FR GB IT LI NL SE**

(71) Anmelder: **SIEMENS AKTIENGESELLSCHAFT, Berlin und München Wittelsbacherplatz 2, D-8000 München 2 (DE)**

(72) Erfinder: **Haas, Heinz, Ing.-grad., Zeilerstrasse 1, D-8400 Viehhausen (DE)**
Erfinder: **Kuhn, Gerhard, Dr. rer. nat., Südring 12A, D-8401 Alteglofsheim (DE)**

(54) Anordnung zur Verbindung eines Lichtwellenleiters mit einem Bauteil.

(57) Die Erfindung betrifft eine Anordnung zur Verbindung eines Lichtwellenleiters (4) mit einem Lichtsender (1) oder einem Lichtempfänger oder einem weiteren Lichtwellenleiter (14) über einen weichen Kunststoff (7), der nach seinem Einlegen geringfügig mit Druck beaufschlagt wird und so durch Adhäsion am Lichtwellenleiter (4, 14) bzw. Lichtempfänger bzw. Lichtsender (1) haftet. Dadurch können Lichtverluste weitgehend vermieden werden.

EP 0 110 072 A2

0110072

SIEMENS AKTIENGESELLSCHAFT     Unser Zeichen

Berlin und München            VPA  82 P 1 9 8 9 E

Anordnung zur Verbindung eines Lichtwellenleiters mit
einem Bauteil

Die Erfindung betrifft eine Anordnung zur Verbindung eines Lichtwellenleiters mit einem Bauteil, bei der ein
stirnseitiges Ende des Lichtwellenleiters dem Bauteil so
gegenüberliegt, daß Lichtübertragung zwischen Lichtwellenleiter und dem Bauteil erfolgt.

Die Lichtübertragung zwischen der Glasfaser eines Lichtwellenleiters und einem Lichtsender- bzw. einem Lichtempf-
fänger-Bauteil sowie auch die Lichtübertragung zwischen
zwei Lichtfasern von zwei miteinander zu verbindenden
Lichtwellenleitern sollte an diesen sogenannten Koppelstellen möglichst verlustfrei erfolgen. Das heißt, das
beispielsweise aus dem Lichtsender austretende und zur
Lichtfaser geführte Licht sollte möglichst vollständig in
diese eingeführt werden, so daß an Grenzflächen nur ein
äußerst geringer Verlust an Lichtleistung entsteht.

Bisher werden die Lichtsender-Bauteile in der Form von
Halbleiterchips mit einem harten Gießharz versehen, auf
das ein am Ende des Lichtwellenleiters angebrachter Glasfaserstecker aufgesetzt ist. Bei einer derartigen Anordnung tritt aber ein zweimaliger Verlust an Lichtleistung
auf, der durch die Reflexion an den Grenzflächen zwischen
dem harten Gießharz und Luft sowie zwischen Luft und dem
Glas der Lichtfaser zurückzuführen ist. Es hat sich nämlich gezeigt, daß ein - wenn auch dünner - Luftspalt zwischen der Oberfläche des Lichtsender-Bauteils und dem
stirnseitigen Ende eines Lichtwellenleiters nicht zu vermeiden ist, wenn dieser mittels eines Glasfasersteckers
auf den Lichtsender aufgesetzt wird.

Kot 1 Dx / 04.11.1982

0110072

82 P 1989 E

Auch bei der Verbindung des Lichtempfänger-Bauteils mit dem Lichtwellenleiter treten derartige Verluste auf: Gewöhnlich wird der Glasfaserstecker des Lichtwellenleiters auf das Glas einer am Lichtempfänger angebrachten ebenen Fensterkappe aufgesetzt, so daß ebenfalls ein zweimaliger Verlust an Lichtleistung durch Reflexion an den Grenzflächen zwischen dem Glas der Fensterkappe und Luft sowie zwischen Luft und dem Glas der Glasfaser des Lichtwellenleiterkabels vorliegt.

Wenn zwei Lichtwellenleiterkabel miteinander verbunden werden sollen, dann werden die beiden ebenen, polierten und in Kunststoff eingebetteten Glasfasern aneinandergefügt, wobei aber in der Regel ein wenn auch schmaler Luftspalt zwischen den beiden Glasfasern nicht zu vermeiden ist.

Es ist daher Aufgabe der Erfindung, eine Anordnung zur Verbindung eines Lichtwellenleiters mit einem Bauteil zu schaffen, bei der praktisch kein Verlust an Lichtleistung auftreten kann.

Diese Aufgabe wird erfindungsgemäß dadurch gelöst, daß weicher Kunststoff zwischen das Ende des Lichtwellenleiters und das Bauteil unter Druckbeaufschlagung eingelegt ist und so durch Adhäsion am Ende des Lichtwellenleiters und am Bauteil haftet.

Die Erfindung ermöglicht so eine lösbare Verbindung zwischen einem Lichtwellenleiter und einem Bauteil, das ein Lichtsender, ein Lichtempfänger oder ein weiterer Lichtwellenleiter sein kann, wobei durch die Adhäsion keine Grenzflächen zur Luft auftreten und so eine erhöhte Leistungsübertragung an diesen Koppelstellen möglich ist. Dadurch kann ein Lichtleistungsverlust von etwa 20 % vermieden werden, der sonst an den beiden Grenzflächen zur Luft auftreten würde.

Der verwendete Kunststoff ist in dem Frequenzbereich des durch die Lichtfaser übertragenen Lichts lichtdurchlässig und weich, so daß er nach einer eventuell vorgenommenen Justierung zwischen Lichtwellenleiter und Bauteil durch leichten Druck an der Koppelstelle beaufschlagt werden kann, ohne eine Beschädigung des Lichtwellenleiters oder des Bauteils hervorzurufen. Dieser Druck kann beispielsweise durch eine äußere Verschraubung erreicht werden. Infolge der Druckbeaufschlagung wird der weiche Kunststoff zwischen den zu koppelnden Teilen, also dem Lichtwellenleiter und dem Bauteil, zusammengepreßt, so daß der Luftspalt aus dem Lichtweg durch Adhäsion verschwindet. Der Brechungsindex des weichen Kunststoffs sollte etwa zwischen 3,4 und 1,5 liegen, wenn ein Lichtsender oder ein Lichtempfänger mit einem Lichtwellenleiter gekoppelt werden soll. Werden dagegen zwei Lichtwellenleiter miteinander gekoppelt, dann sollte der Brechungsindex des Kunststoffs möglichst nahe bei 1,5 liegen.

Mit dem weichen Kunststoff wird entweder der Chip des Lichtsenders oder des Lichtempfängers direkt abgedeckt. Es ist aber auch möglich, diesen weichen Kunststoff als oberste Schicht auf einen härteren Kunststoff bzw. auf ein Glasfenster aufzutragen. Wichtig ist dabei lediglich, daß kein Luftspalt zwischen dem härteren Kunststoff bzw. dem Glasfenster und dem weichen Kunststoff vorhanden ist. Es ist auch möglich, ein dünnes Plättchen oder eine Folie aus einem weichen Kunststoff zwischen das Bauteil und die Glasfaser des Lichtwellenleiters einzulegen bzw. zwischen die Lichtfaser-Lichtfaser-Koppelstelle einzubringen.

Nachfolgend wird die Erfindung an Hand der Zeichnung näher erläutert. Es zeigen:

Fig. 1 die Kopplung eines Lichtsenders bzw. Lichtempfängers mit einem Lichtwellenleiter und

Fig. 2 die Kopplung von zwei Lichtwellenleitern.

BAD ORIGINAL

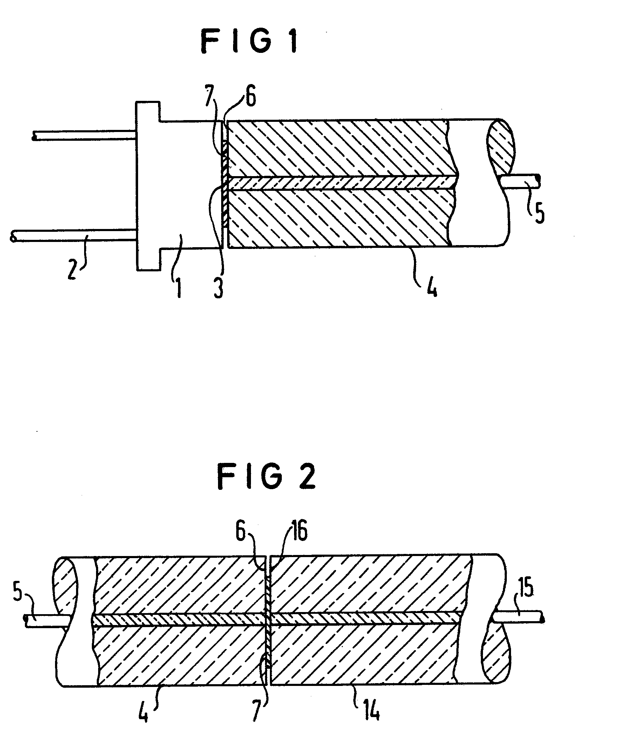

Fig. 1 zeigt ein Lichtsender- bzw. Lichtempfänger-Bauteil 1 mit Anschlüssen 2 und einem - bei einem Lichtsender - Lichtaustrittsfenster 3, über das Licht abgestrahlt wird. Gegenüber zu diesem Lichtaustrittsfenster 3 liegt ein Lichtwellenleiterkabel 4, in dessen Seele sich eine Glasfaser 5 befindet. Zwischen dem stirnseitigen Ende 6 des Lichtwellenleiterkabels 4 und dem Lichtaustrittsfenster 3 ist eine weiche Kunststoffolie 7 mit einem Brechungsindex zwischen 3,4 und 1,5 unter geringfügiger Druckbeaufschlagung eingebracht, so daß diese Kunststoffolie 7 durch Adhäsion am stirnseitigen Ende 6 des Lichtwellenleiterkabels 4 und am Lichtaustrittsfenster 3 haftet.

Fig. 2 zeigt die Verbindung von zwei Lichtwellenleiterkabeln 4 und 14 mit jeweils einer Glasfaser 5 bzw. 15. Zwischen die stirnseitigen Enden 6 und 16 dieser beiden Lichtwellenleiter ist eine Kunststoffolie 7 eingelegt, die einen Brechungsindex möglichst nahe bei 1,5 besitzt und durch die Druckbeaufschlagung an den beiden stirnseitigen Enden 6 bzw. 16 durch Adhäsion haftet.

4 Patentansprüche
2 Figuren

0110072

82 P 1989 E

Patentansprüche

1. Anordnung zur Verbindung eines Lichtwellenleiters mit einem Bauteil, bei der ein stirnseitiges Ende des Lichtwellenleiters dem Bauteil so gegenüberliegt, daß Lichtübertragung zwischen Lichtwellenleiter und dem Bauteil erfolgt, d a d u r c h   g e k e n n z e i c h n e t , daß weicher Kunststoff (7) zwischen das Ende des Lichtwellenleiters (4) und das Bauteil (1) unter Druckbeaufschlagung eingelegt ist und so durch Adhäsion am Ende (6) des Lichtwellenleiters (4) und am Bauteil (1) haftet.

2. Anordnung nach Anspruch 1, bei der das Bauteil ein Lichtsender oder Lichtempfänger ist, d a d u r c h   g e k e n n z e i c h n e t ,   daß der Brechungsindex des Kunststoffs (7) zwischen 3,4 und 1,5 liegt.

3. Anordnung nach Anspruch 1,   bei der das Bauteil ein weiterer Lichtwellenleiter ist, d a d u r c h   g e - k e n n z e i c h n e t ,   daß der Brechungsindex des Kunststoffs (7) etwa 1,5 beträgt.

4. Anordnung nach einem der Ansprüche 1 bis 3, d a - d u r c h   g e k e n n z e i c h n e t ,   daß der Kunststoff (7) als Folie zwischen Lichtwellenleiter und Bauteil eingelegt ist.

0110072

1/1

FIG 1

FIG 2